# EUROPEAN PATENT SPECIFICATION

(11) **EP 1 643 379 B1**
(45) Date of publication and mention of the grant of the patent: **25.10.2017**
(21) Application number: 05013922.9
(22) Date of filing: 28.06.2005
(51) Int. Cl.: G06F 17/30

(54) **Document searching system**
System zum Suchen von Dokumenten
Système de recherche de document

(30) Priority: 29.09.2004 EP 04023112
(43) Date of publication of application: 05.04.2006
(73) Proprietor: SAP SE, 69190 Walldorf (DE)
(72) Inventor: Elsaesser, Thomas, 68766 Hockenheim (DE); Engel, Liane, 68165 Mannheim (DE)
(74) Representative: Müller-Boré & Partner Patentanwälte PartG mbB

(56) References cited:
- US-B1- 6 438 539
- CROFT W B ET AL: "The use of adaptive mechanisms for selection of search strategies in document retrieval systems" RESEARCH AND DEVELOPMENT IN INFORMATION RETRIEVAL. PROCEEDINGS OF THE JOINT BCS AND ACM SYMPOSIUM CAMBRIDGE CAMBRIDGE, UK, [Online] 1984, pages 95-110, XP002361989 ISBN: 0-521-26865-6 Retrieved from the Internet: URL:http://portal.acm.org/ft_gateway.cfm?i d=636811&type=pdf&coll=GUIDE&dl=GUIDE&CFID =65089353&CFTOKEN=75949053> [retrieved on 2006-01-10]
- TOMBROS A ET AL: "The effectiveness of query-specific hierarchic clustering in information retrieval" INFORMATION PROCESSING & MANAGEMENT, ELSEVIER, BARKING, GB, vol. 38, no. 4, July 2002 (2002-07), pages 559-582, XP004344037 ISSN: 0306-4573
- ANDRADE H ET AL: "Multiple query optimization for data analysis applications on clusters of SMPs" CLUSTER COMPUTING AND THE GRID 2ND IEEE/ACM INTERNATIONAL SYMPOSIUM CCGRID2002 BERLIN, GERMANY 21-24 MAY 2002, PISCATAWAY, NJ, USA,IEEE COMPUT. SOC, US, 21 May 2002 (2002-05-21), pages 154-162, XP010592617 ISBN: 0-7695-1582-7
- KARNAUGH M ED - INSTITUTE OF ELECTRICAL AND ELECTRONICS ENGINEERS: "A new toolkit for non-admissible heuristic search" PROCEEDINGS OF THE CONFERENCE ON ARTIFICIAL INTELLIGENCE APPLICATIONS. SANTA BARBARA, MAR. 5 - 9, 1990, LOS ALAMITOS, IEEE COMP. SOC. PRESS, US, vol. VOL. 1 CONF. 6, 5 May 1990 (1990-05-05), pages 162-168, XP010018647 ISBN: 0-8186-2032-3
- BRUNELLI R ET AL: "Query simplification and strategy selection for image retrieval" PATTERN RECOGNITION, 2000. PROCEEDINGS. 15TH INTERNATIONAL CONFERENCE ON SEPTEMBER 3-7, 2000, LOS ALAMITOS, CA, USA,IEEE COMPUT. SOC, US, vol. 4, 3 September 2000 (2000-09-03), pages 279-282, XP010533074 ISBN: 0-7695-0750-6
- PRASAN ROY, S.SESHADRI, S. SUDARSHAN, SIDDHESH BHOBE: "Efficient and Extensible Algorithms for Multi Query Optimization"[Online] 2000, pages 249-260, XP002361990 Dallas, TX, USA Retrieved from the Internet: URL:http://citeseer.ist.psu.edu/cache/pape rs/cs/14118/http:zSzzSzwww.cse.iitb.ernet. inzSz~prasanzSzmqo-full.pdf/roy00efficient .pdf> [retrieved on 2006-01-06]
- Marc L Resnick ET AL: "BEST PRACTICES IN SEARCH USER INTERFACE DESIGN", Florida International University, 1 January 2002 (2002-01-01), pages 627-631, XP55012450, Miami, Floriday, USA Retrieved from the Internet: URL:http://citeseerx.ist.psu.edu/viewdoc/d ownload?doi=10.1.1.85.1924&rep=rep1&type=p df [retrieved on 2011-11-17]
- Jacques Savoy ET AL: "Report on the TREC-4 Experiment: Combining Probabilistic and Vector-Space Schemes", Faculté de droit et des sciences économiques Université de Neuchâtel, 1 January 1996 (1996-01-01), pages 537-547, XP55012491, CH - 2000 Neuchâtel (Switzerland) Retrieved from the Internet: URL:http://citeseerx.ist.psu.edu/viewdoc/d ownload;jsessionid=315470A466D95227FD50ABF 61EE7B242?doi=10.1.1.21.1155&rep=rep1&type =pdf [retrieved on 2011-11-18]

## Description

### TECHNICAL FIELD

This patent application relates, in general, to searching for documents and, more particularly, to using a dynamic searching strategy to conduct a search.

### BACKGROUND

In relational databases, searches are performed using search queries. Search queries can include any kind of strings. A "JOIN" statement may be used to combine two or more searches of a database. One drawback of such searching is that it cannot be used to search for distributed content, meaning content that is stored in different locations, such as different databases or different database tables having different key fields.

Another known searching method is to perform a search for a specified search string in different databases or tables according to a predefined strategy. Such searches are performed independently, and results thereof may be combined. For instance, when searching for a particular string in a distributed document, a full-text database may be searched. Then, a classification table may be searched, followed by an object link table. The partial search results may then be combined to provide a search result.

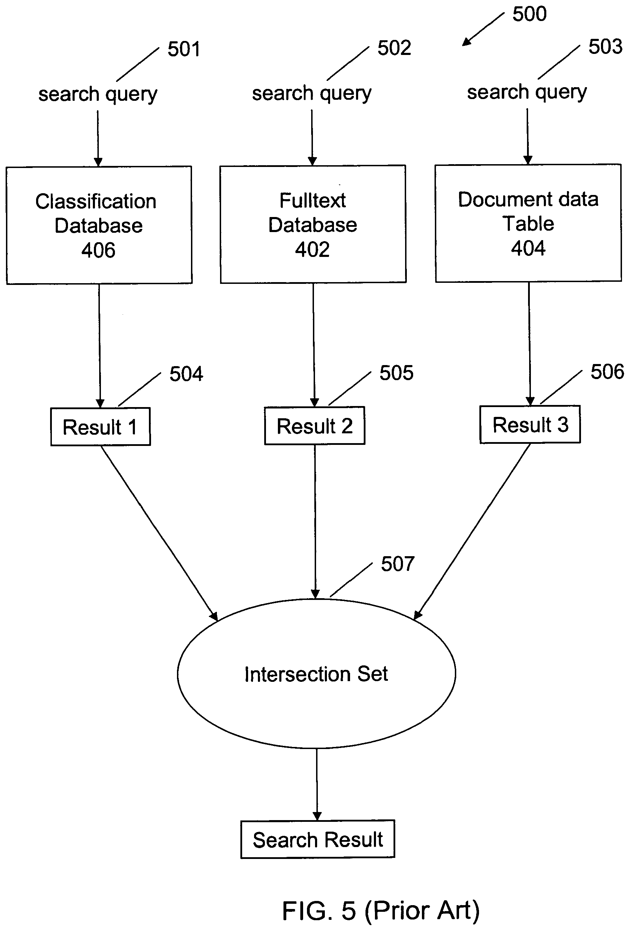

Fig. 5 illustrates how searching may be performed using the foregoing method. In system 500, a user enters search queries 501, 502 and 503. Each search query is used by system 500 to perform searches in a different source 402, 404 and 406. Searching in each of sources 402, 404 and 406 produces the following search results: result1 504, result2 505 and result3 506. Search results 504, 505 and 506 are combined as intersection set 507 (e.g., search results 504, 505 and 506 may be logically "ANDed" or "ORed"). Thereafter, a final search result is output. System 500 requires extensive searching because each source is fully searched, i.e., no documents are excluded even if they fail to meet other criteria. Such searching can be relatively processing intensive and, as a result, relatively slow.

Document Tombros A. et al.:" The Effectiveness of query-specific hierarchic clustering in information retrieval", Information Processing and Management, Elsevier, Barking, GB, vol. 38, no. 4, July 2002, pages 559-582, XP 004344037 ISSN: 0306-4573 discloses hierarchic document clustering applied to information retrieval. Retrieval effectiveness is increased by applying hierarchic clustering to search results (query-specific clustering).

Croft W. B. et al.: "The Use of Adaptive Mechanisms for Selection of Search Strategies in Document Retrieval Systems", Research and Development in Information Retrieval. Proceedings of the Joint BCS and ACM Symposium Cambridge, Cambridge, UK, 1984, pages 95-110, XP 002361989 ISBN: 0-521-26865-6 discloses a document retrieval system in which a search strategy that is appropriate for particular user inquiry can be chosen. The particular search strategy is chosen based on weights which changes iteratively with time and determines the probability of selection of the actions. The weights are a function of previous weights, previous context, previous action, and a pay-off function.

In document US 6,438,539 B1 a method of providing a network user with information contained within at least one of the network sites in view of the user search criteria wherein a provided database is populated with the plurality of other research criteria provided by other network users and a plurality of search strategies each of the search strategies comprising information regarding network sites likely to contain information relevant to the other search criteria wherein the other search criteria is linked with the search strategies within the database and wherein it is selected from the database at least one search strategy based upon the user search criteria and where at least one search strategy is executed and the search results are provided to the user.

### SUMMARY

This patent application describes methods and apparatus, including computer program products, for performing document searches.

In general, in one aspect, the invention is directed to searching for documents using different sources, and includes receiving a search statement containing information for the documents, and determining a search strategy based on the search statement. The search strategy includes first and second search activities for searching first and second sources, respectively, where the first and second search activities are weighted. The first and second sources are searched using the first and second search activities, respectively, where an order in which the first and second search activities are performed is dictated by weightings of the first and second search activities. This aspect may also include the following.

The search statement may be a search query and a search parameter. The search query may include a string and the search parameter may correspond to a source to be searched for the string. The weightings of the first and second search activities may be based, at least in part, on the search query and the search parameter.

Searching may include performing the first search activity to identify a first set of documents, and performing the second search activity using the first set of documents. The second search activity may be performed to identify a second set of documents, where the second set of documents may be a subset of the first set of documents. A third search activity may be performed for searching a third source. The third search activity may be part of the search strategy, and may use the second set of documents.

Performing the second search activity using the first set of documents may include performing the second search activity for information relating to the second set of documents. A result may be provided, which is obtained by searching the first and second sources using the first and second search activities, respectively. The result may identify documents that comport with the search statement. At least one of the first and second sources may include at least one of a table and a database.

The weightings may be based, at least in part, on a specificity of the search statement. The specificity may be defined in accordance with one of a number of characters in a part of the search statement and whether the search statement contains a wildcard character. The documents may stored in different locations that are accessible over a network. An input engine, an evaluation engine, a determination engine, and a search engine may be used in an overall process that includes the searching.

Embodiments also provide a method for searching documents using a search statement, comprising storing document information distributed over at least two sources, evaluating the search statement, determining a search strategy with at least two search steps based on the evaluation results, and searching the at least two sources with the search steps in the order of the determined search strategy. In this case it is also preferred to define a search query and search parameters within the search statement. The search parameters can define the type of the search. Embodiments also provide assigning a search query to a search parameter. The search query can define values of searched documents at least partially. Evaluating the search statement comprises evaluating search parameters to define the search steps to be carried out is also preferred. Determining the search strategy can further comprise weighting the search steps.

Evaluating the search statement can comprise evaluating the search statement and/or the search queries.

According to embodiments determining a search strategy comprises defining an order of the search steps based on their weighting. Searching the documents can comprise using a full text search, a classification search, an object link search, and/or document data search. It is also possible to use search results of a previous search step for consecutive search steps. Storing document information can comprise storing content and meta-data of the documents within different tables, tables with different key fields, different databases, and/or different indexes.

According to an aspect there is also provided a computer program product tangibly embodied in an information carrier, the computer program product comprising instructions that, when executed, cause at least one processor to perform operations comprising storing document information distributed over at least two sources, evaluating the search statement, determining a search strategy with at least two search steps based on the evaluation results, and searching the at least two sources with the search steps in the order of the determined search strategy. Embodiments also provide a computer system arranged for searching documents comprising at least two distributed sources arranged to store document information, an input engine arranged to receive user input of a search statement, an evaluation engine arranged to evaluate the search statement, a determination engine arranged to determine a search strategy with a least two search steps based on the evaluation results, and a search engine arranged to search the at least two sources with the search steps in the order of the determined search strategy. The method steps can be implemented within a computer program and a computer program product.

The details of one or more examples are set forth in the accompanying drawings and the description below. Further features, aspects, and advantages of the invention will become apparent from the description, the drawings, and the claims.

### DESCRIPTION OF THE DRAWINGS

- Fig. 1: illustrates an example of a search statement.
- Fig. 2: illustrates an example of document metadata.
- Fig. 3: illustrates different documents having different content and metadata.
- Fig. 4: illustrates an example of a full-text database, a document data table, and a classification database for storing content and metadata of documents.
- Fig. 5: illustrates a prior art searching system.
- Fig. 6: is a flowchart showing the searching process described herein.
- Fig. 7: illustrates a computer system on which the searching process of Fig. 6 may be implemented.

Like reference numerals in different figures indicate like elements.

### DETAILED DESCRIPTION

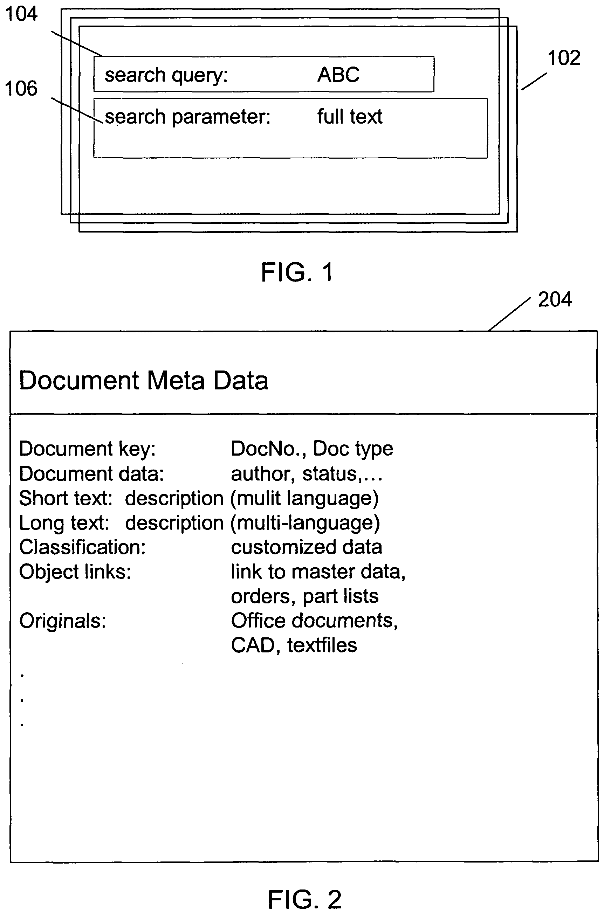

Fig. 1 illustrates a search statement 102. Search statement 102 includes search query 104 and search parameter 106. The search query contains information for which a search is conducted. In this implementation, search query 104 can be any type of character or number string, such as "ABC". Search parameter 106, in this implementation, is organizational information that corresponds to the type of information to be searched. By way of example, in Fig. 1, the type of information is "full-text", meaning the entire text of one or more documents. Thus, in the example of Fig. 1, the full-text of documents in a pre-selected database is to be searched for the character string "ABC". Any documents containing this character string are identified as a result of the search.

Searches may be based on text within documents or on metadata stored with or in the documents. Metadata may contain information identifying the document, such as a version identifier that identifies the version of a document, and information specifying characteristics of a document, such as whether a document is marked for deletion. Search parameters may be based on metadata and/or document text.

Fig. 2 shows document metadata 204. Different types of documents may have different types of metadata. In Fig. 2, the metadata includes a document key, document data, short text, long text, classification, object links, and originals. Document key identifies a document using a document number, a document type, or the like. Document data identifies the author of a document, a status of the document, its creation time, its last edit time, or the like. Short text includes a description of the document, such as an abstract or summary, and can be in multiple languages. Long text includes a more explicit description of the document, and can also be in multiple languages. Classification specifies a document classification, which can be tailored for customers needs. For example, a document can be classified as a report, a specification, a communication, or the like. Object links can include descriptions of links in the document to one or more other objects. For example, a document can link to master data, a part lists, orders, or any other type of business objects. Originals can include a description of the origin of the document. Any other type of metadata may also be included including, but not limited to, document version, partial document, deletion tag, computer-aided design (CAD) tag, professional worker, revision number, access group, lab, design unit, etc., some of which are described below.

Document searches may be based on the foregoing metadata. For example, search parameters that may be used in search statement 102 include, but are not limited to:
(a) document type, which enables searching by document type;
(b) document number, which enables searching by document number;
(c) document version, which enables searching by version identifier;
(d) partial document, which enables searching through only a specified part of one or more documents;
(e) deletion tag, which enables searching for one or more documents having a deletion tag, where a deletion tag is some indication as to whether the document is to be deleted;
(f) CAD tag, which enables searching for one or more documents having a CAD tag, where a CAD tag is some indication that the document was generated using a CAD system;
(g) a professional worker identifier, which enables searching for one or more documents created or revised by a particular type of, or individual, professional worker;
(h) access group, which enables searching for one or more documents to which one or more groups have specified access rights, such as "open", "read", "edit", or the like;
(i) revision number, which enables searching by revision number, where a revision number can also be indicative of status, such as where a document is in a revision cycle;
(j) laboratory or design unit, which enables searching for documents created or revised by a professional in a laboratory or design unit;
(k) document state, which enables searching for one or more documents having a specified state at a particular moment in time;
(l) short text, which enables searching for one or more documents that have, or that do not have, a specified string or strings in its document short text, where "short text" can mean an abstract or summary of a document;
(m) long text, which enables searching for one or more documents that have, or that do not have, a specified string or strings in its document long text, where "long text" can mean an extended portion from a document's short text up to, and including, its full-text;
(n) data carrier, which enables searching for one or more documents that are stored on a specified data carrier or for one or more documents having attachment(s) that are stored on a specified data carrier, where a data carrier can be a storage medium, such as a compact disk, or a storage location, such as a server, computer, or the like;
(o) workstation application, which enables searching for one or more documents that were generated using a specified workstation application, meaning a computer program or the like;
(p) file name, which enables searching for one or more documents by file name;
(q) PHIO attributes, which enables searching for one or more documents by physical attribute(s) of object(s) within the documents;
(r) LOIO attributes, which enables searching for one or more documents by logical attribute(s) of object(s) within the documents;
(s) object links, which enables searching for one or more documents having one or more links to a specified object or document;
(t) classification, which enables searching for one or more documents by the classification and properties of object(s) contained within the documents; and
(u) folder search, which enables searching for one or more documents within a specified particular folder. Two or more of these search parameters may be combined to extend the set of documents to be searched, as described in more detail below. That is, more than one search statement 102 may be used to define a search.

In Fig. 2, metadata 204 can be stored in different locations. These locations may be searchable, depending on which search parameters are specified. For example, document status can be stored in a separate status log table. In this regard, different tables and databases can be used to store different types of metadata. For example, documents links can be stored in a document link table. Short and long text can be stored in a short text table and a long text table, respectively. Other metadata, such as document type, document number, document version, partial document, deletion tag, CAD tag, professional worker identifier, access group, revision number, and/or lab or design unit can be stored in a single common table or multiple tables. Document classification can be stored in a classification database. Each storage location corresponds to a data "source".

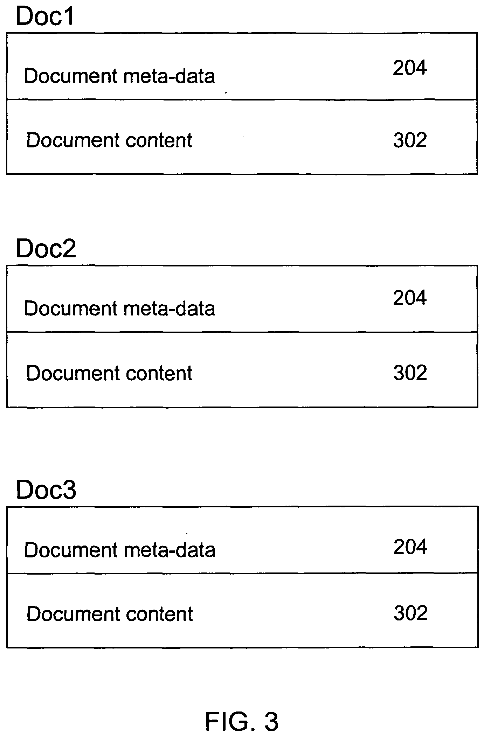

Fig. 3 shows three documents, which are labelled Doc1, Doc2, and Doc3. All three documents include metadata 204 and content 302. Metadata 204 can include different information for each document. The information included in metadata 204 can depend on the type of document, as indicated above. The metadata can be stored in different tables, which may, or may not, be part of an attribute database. In this regard, an attribute database can include multiple tables, each of which stores a type of metadata.

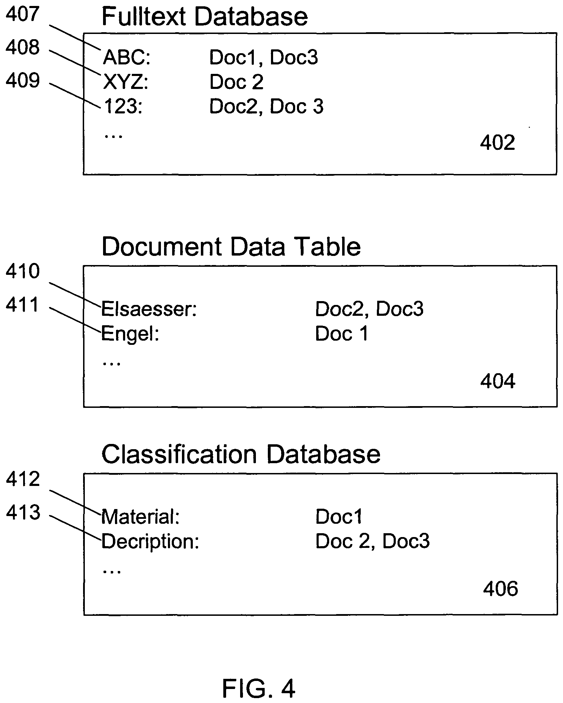

Document content 302 can also be different for each document. For example, some documents contain primarily text, examples of which include reports, descriptions, and specifications. Document content 302 may be part of a full-text database. The full-text database, together with all other databases for documents Doc1, Doc2, Doc3, can be used as searching sources. Fig. 4 shows databases and tables, which may be searched using a search statement such as search statement 102 of Fig. 1.

Fig. 4 shows a full-text database 402. Full-text database 402 stores content for one or more documents. In this example, full-text database 402 has a first entry 407. Entry 407 refers to Doc1 and Doc3, meaning that the character string "ABC" is in the full-text of documents Doc1 and Doc3. Full-text database 402 also has an entry 408. Entry 408 refers to Doc2, meaning that the character string "XYZ" is in the full-text of document Doc2. Full-text database 402 also has an entry 409. Entry 409 refers to Doc2 and Doc3, meaning that the numerical string "123" is in the full-text of documents Doc2 and Doc3. It is noted that any alphanumeric, or other, string may be used for the search query.

Fig. 4 also shows a document data table 404. Document data table 404 contains metadata relating to documents Doc1, Doc2, and Doc3. In this example, the metadata identifies authors of documents Doc1, Doc2 and Doc 3. For example, "Elsaesser" 410 is referred to in Doc2 and Doc3 because "Elsaesser" is the author of documents Doc2 and Doc3. "Engel" 411 is referred to in Doc1 because "Engel" is the author of Doc1.

Fig. 4 also shows a classification database 406. Classification database 406 contains metadata indicating the classifications of documents Doc1, Doc2 and Doc3. In this example, the classifications include material 412 and description 413.

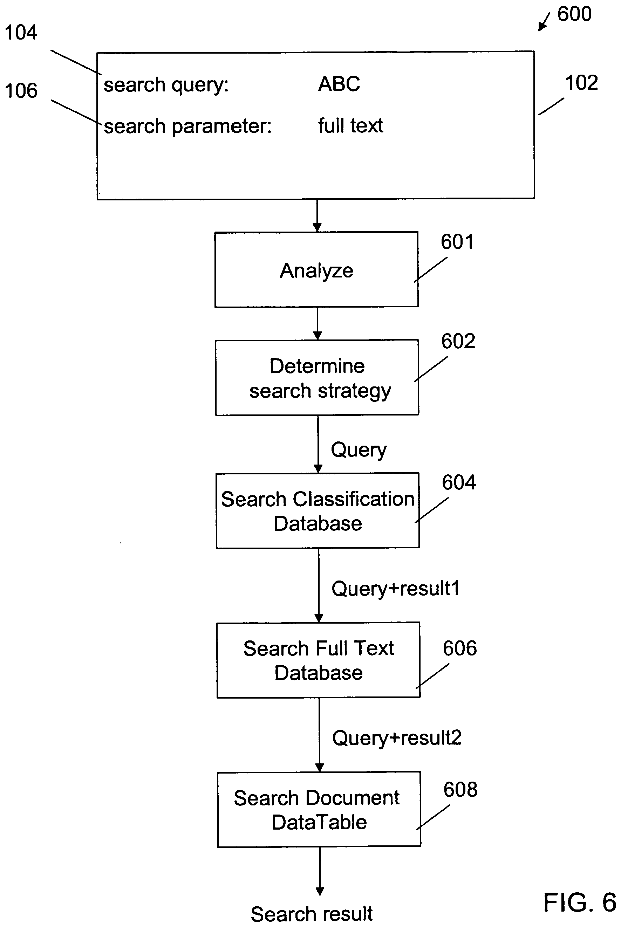

Fig. 6 shows a document searching process 600 that provides advantages over that shown in Fig. 5. In this implementation, searching process 600 is used to search for documents in two or more sources. It is noted, however, that searching process 600 is not so limited, and can be used to search in a single document as well.

Referring to Fig. 6, process 600 receives a search statement 102. Search statement 102 may, or may not, be received from an external system, and may be input by a user. Process 600 analyzes (601) search statement 102. The analysis includes identifying search query 104 and search parameter 106 in search statement 102. Although only one search query and search parameter are shown in Fig. 6, search statement 102 may include multiple search parameters and/or search queries upon which a search is to be based.

In this regard, in a search statement, each search query is associated with one or more search parameters. This indicates which parameters are to be searched using the string in the associated search query. So, in search statement 102, search query 104 is associated with search parameter 106. Thus, the analysis (601) also may include determining association(s) between search parameters and search queries.

Process 600 determines (602) a search strategy based on search query 104 and search parameter 106. That is, search parameter (106) specifies the type of the search, including identifying the source(s) to be searched. Search query 104 contains data to be searched for in the source(s) specified by search parameter 106.

In this implementation, the search strategy can be a dynamic search. A dynamic search defines an order of search activities, which can change dynamically depending upon the content of search statement 102.

A search activity includes conducting a search in a source specified in search parameter 106. Once the search activities have been identified, the order in which they are carried-out is specified by weighting each search activity based on the parameters and/or queries associated with the search. The searches may be weighted based on the number and/or type of parameters or queries included in the search, and the specificity of those parameters and/or queries. By way of example, a search through a document data table can be conducted for different metadata. Searching in the document table can be initiated in response to different search parameters. If "document type" is one of the search parameters, the search activity associated with searching for a document type is assigned one or more tokens. If an additional search parameter is used, such as "document number", then one or more additional tokens are assigned to the search activity. If only part of the document number of document type is provided, one or more tokens can be withdrawn. Similarly, if a "wildcard" search parameter is provided, or a search parameter is truncated with a wildcard (e.g., "*"), one or more tokens can be withdrawn. The sum of all token for a search activity constitutes its weight.

As indicated above, the weight of a search activity can also be based on the identity of the parameter used in the search. For example, a larger number of tokens may be assigned to a search activity that includes a full-text search than to a search activity that relates to other search parameter(s). This is because a full-text search involves searching all document data stored in a table. That is, a full-text search is weighted more because it is a more comprehensive search and, thus, is more likely to produce extensive search results than other types of searches.

Weighting may also be based on the length of a search query, as well as the content of the search query. As noted above, if a search query is truncated with a wildcard, one or more tokens may be withdrawn from that search query. If the search query is between four and six characters, one or more token may be assigned to the search query, and if the search query is longer than six characters, still further tokens are assigned. The logic here is that longer search queries are more likely to produce more extensive results.

In some cases, different search activities may be assigned the same weighting. For example, a same type of weighting may be applied for searching based on a document classification as for a full-text search, or the like. The number of tokens assigned or withdrawn for a search activity can be customized, e.g., by a user or another program, in order to affect the search strategy. For example, different computational environments and/or different types of documents may require different weightings to obtain a search strategy that is most effective for the circumstances.

Weighting of search activities enables process 600 to determine which search activities will result in the fewest search results (i.e., "hits"), e.g., the least number of documents matching a particular search query. That is, the search activity with the lowest weighting will likely produce the fewest search results and vice versa. Process 600 can also determine, based on the weightings, which source is likely to provide the fewest search results (since sources are associated with search activities). Process 600 can use the weightings also to determine which search activities or sources will provide the second least number of hits, the third least number of hits, and so on.

The results of a previous search can also be used in a subsequent search, which can improve search efficiency. This is one aspect of dynamic searching, noted above. More specifically, process 600 determines a sequence of search activities (associated with a search statement) based on weighting information for those search activities. The first search activity that is conducted (based on the weighting) may provide a "hit list" with the least number of hits. Subsequent searches may be limited by documents in this hit list. As a result, the amount of searching, and the resulting searching speed, can be reduced.

Referring back to Fig. 4, in one example, search parameters specify searching full-text database 402, document data table 404, and classification database 406. Referring to Fig. 6, process 600 determines (602) a sequence of search activities based on weightings of those activities. For example, classification database 406 may be weighted least; full-text database 402 may be weighted next least, and document data table 404 may be weighted most. Thus, process 600 searches (604) classification database 406, then searches (606) full-text database 402 (606), and then searches (608) document data table 404.

During searching, process 600 sends, to classification database 402, the search query corresponding to the search parameter for searching classification database 402, and conducts a search for document metadata matching the search query. The result of this search, called "result1" includes documents having classification metadata that matches the information in the search query. Process 600 then combines result1 with the search query corresponding to the search parameter for searching full-text database 402. Process 600 then conducts a second search in full-text database 402. The results of this second search, called result2, include documents that were obtained in the first search and that have text (i.e., part of their full-text) that matches the search query. Process 600 then combines result2 with the search query corresponding to the search parameter for searching document data table 404. Process 600 then conducts a third search in document data table 404. The results of this third search include documents that were obtained in the second search and that have information from document data table 404. For example, the search may be for only documents by a particular author, and process 600 may identify only those documents from the second search by that author. Thus, the end result of process 600 includes identification of documents that meet requirements of search statement(s) 102. The final search result may include, e.g., a list of documents that meet the requirements of the search statement, hyperlinks to those documents, and/or short summaries of those documents.

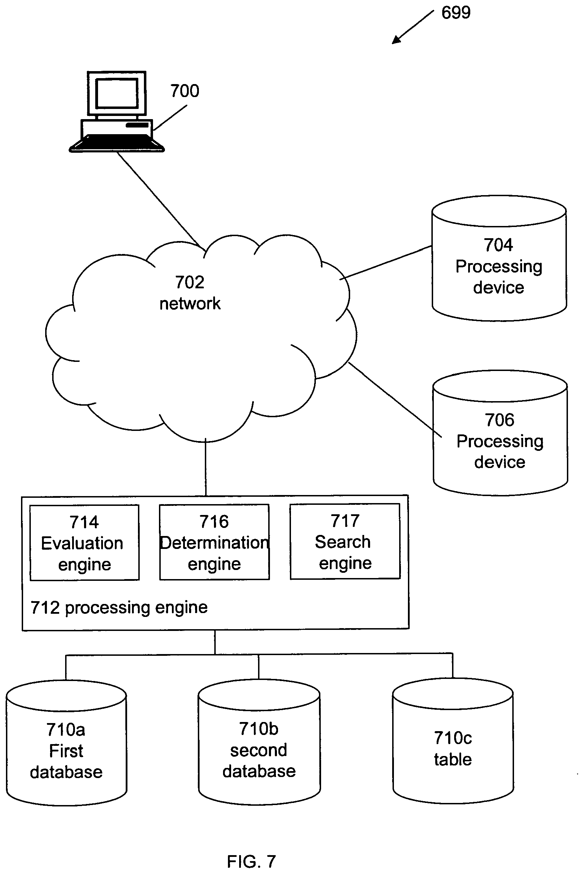

Fig. 7 illustrates a system 699 that may be used to implement process 600. System 699 includes a processing device 700, such as a computer, for initiating a search. Processing device 700 can be connected with other processing devices 704, 706 and 712 (e.g., computers) via a network 702. Documents may be stored on one or more processing devices 704, 706 and 712 or elsewhere. The documents can be stored in databases and/or tables, such as first database 710a which can be a full-text database, second database 710b which can be a classification database, and table 710c.

In this implementation, processing device 712 includes an evaluation engine 714, a determination engine 716, and a search engine 717. A user inputs, at processing device 700, a search statement containing a search query and search parameters. The search statement is sent via network 702 to processing device 712. Inside processing device 712, the search statement is evaluated in evaluation engine 712 to obtain information upon which a search strategy is based. Using this information, determination engine 714 determines a search strategy. The resulting sources are searched in the order of the search strategy and the results are provided via network 702 to processing device 700.

Process 600 and any modifications thereto described above (referred to collectively as "the searching processes") are not limited to use with the hardware and software described above; they may find applicability in any computing or processing environment and with any type of machine that is capable of running machine-readable instructions. The searching processes can be implemented in digital electronic circuitry, or in computer hardware, firmware, software, or in combinations thereof.

The searching processes can be implemented via a computer program product, i.e., a computer program tangibly embodied in an information carrier, e.g., in a machine-readable storage device or in a propagated signal, for execution by, or to control the operation of, data processing apparatus, e.g., a programmable processor, a computer, or multiple computers. A computer program can be written in any form of programming language, including compiled or interpreted languages, and it can be deployed in any form, including as a stand-alone program or as a module, component, subroutine, or other unit suitable for use in a computing environment. A computer program can be deployed to be executed on one computer or on multiple computers at one site or distributed across multiple sites and interconnected by a communication network.

Actions associated with the searching processes can be performed by one or more programmable processors executing one or more computer programs to perform the functions of the searching processes. The actions can also be performed by, and the searching processes can be implemented as, special purpose logic circuitry, e.g., an FPGA (field programmable gate array) and/or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. Elements of a computer include a processor for executing instructions and one or more memory devices for storing instructions and data. Generally, a computer will also include, or be operatively coupled to receive data from, or transfer data to, or both, one or more mass storage devices for storing data, e.g., magnetic, magneto-optical disks, or optical disks. Information carriers suitable for embodying computer program instructions and data include all forms of non-volatile memory, including by way of example, semiconductor memory devices, e.g., EPROM, EEPROM, and flash memory devices; magnetic disks, e.g., internal hard disks or removable disks; magneto-optical disks; and CD-ROM and DVD-ROM disks.

The searching processes can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the searching processes, or any combination of such back-end, middleware, or front-end components. The components of the system can be interconnected by any form or medium of digital data communication, e.g., a communication network. Examples of communication networks include a LAN and a WAN, e.g., the Internet.

Activities associated with the searching processes can be rearranged and/or one or more such steps can be omitted to achieve the same results described herein. All or part of the searching processes may be fully automated, meaning that they operate without user intervention, or interactive, meaning that all or part of the searching processes may include some user intervention.

Elements of different embodiments described herein may be combined to form other embodiments not specifically set forth above. Other embodiments not specifically described herein are also within the scope of the following claims.

## Claims

1. A method of searching for documents using different metadata sources, wherein searches are based on text within documents or on metadata stored with or in the documents, comprising:
- receiving a search statement containing information for the documents, wherein the search statement comprises one or more search queries and one or more search parameters, wherein each of the one or more search queries contains data to be searched for in sources specified by the search parameters, and each of the one or more parameters being organizational information that corresponds to the type of information to be searched, including identifying the sources to be searched;
- analyzing (601) the search statement, wherein search queries and search parameters in the search statement are identified, and associating, in the search statement, each search query with one or more search parameters;
- determining (602) a search strategy based on the search statement, the search strategy comprising two search activities for searching first and second sources, respectively, wherein a search activity includes conducting a search in a source specified in the search parameter;
**characterized in that** the method further comprises
- specifying the order in which the search activities are carried-out by weighting each search activity, wherein tokens are assigned to or withdrawn from the search activities based on the search parameters and/or the length and the content of the one or more search queries, the sum of all tokens for a search activity constituting its weight, and wherein a number of tokens assigned or withdrawn for a search activity is customizable;
- performing, based on the order, one of the search activities, to identify a first set of documents, and
- performing the second search activity using the first set of documents, wherein the second search activity is performed to identify a second set of documents, the second set of documents being a subset of the first set of documents.

2. The method of claim 1 further comprising
- performing a third search activity for searching a third source, the third search activity being part of the search strategy, the third search activity using the second set of documents.

3. The method of claim 1 or 2, wherein performing the second search activity using the first set of documents comprises performing the second search activity for information relating to the second set of documents.

4. The method of any one of claims 1 to 3, further comprising:
- providing a result obtained by searching the first and second sources using the first and second search activities, respectively, the result identifying documents that comport with the search statement.

5. The method of any one of claims 1 to 4, wherein at least one of the first and second sources comprises at least one of a table and a database.

6. The method of any one of claims 1 to 5, wherein the weightings are based, at least in part, on a specificity of the search statement, the specificity being defined in accordance with one of a number of characters in a part of the search statement and whether the search statement contains a wildcard character.

7. The method of any one of claims 1 to 6, wherein the documents are stored in different locations that are accessible over a network.

8. A computer program comprising instructions for use in searching for documents using different metadata sources, wherein searches are based on text within documents or on metadata stored with or in the documents, the instructions for causing at least one machine to:
- receive a search statement containing information for the documents, wherein the search statement comprises one or more search queries and one or more search parameters, wherein each of the one or more search queries contains data to be searched for in sources specified by the search parameters, and each of the one or more parameters being organizational information that corresponds to the type of information to be searched, including identifying the sources to be searched;
- analyze (601) the search statement, wherein search queries and search parameters in the search statement are identified, and associating, in the search statement, each search query with one or more search parameters;
- determine (602) a search strategy based on the search statement, the search strategy comprising two activities for searching first and second sources, respectively, wherein a search activity includes conducting a search in a source specified in the search parameter;
**characterized in that** the instructions further cause the at least one machine to:
- specify the order in which the search activities are carried-out by weighting each search activity, wherein tokens are assigned to or withdrawn from the search activities based on the search parameters and/or the length and the content of the one or more search queries, the sum of all tokens for a search activity constituting its weight, and wherein a number of tokens assigned or withdrawn for a search activity is customizable;
- perform, based on the order, one of the search activities, to identify a first set of documents; and
- perform the second search activity using the first set of documents, wherein the second search activity is performed to identify a second set of documents, the second set of documents being a subset of the first set of documents;

9. A system comprising:
- storage locations (710a, 710b, 710c) to store two or more documents; and
- a processing device (712) that executes instructions to search for documents using different metadata sources (704, 706), wherein searches are based on text within documents or on metadata stored with or in the documents, the processing device for executing instructions to:
- receive a search statement containing information for the documents, wherein the search statement comprises one or more search queries and one or more search parameters, wherein each of the one or more search queries contains data to be searched for in sources (704, 706) specified by the search parameters, and each of the one or more parameters being organizational information that corresponds to the type of information to be searched, including identifying the sources (704, 706) to be searched;
- analyze (601) the search statement, wherein search queries and search parameters in the search statement are identified, and associating, in the search statement, each search query with one or more search parameters;
- determine (602) a search strategy based on the search statement, the search strategy comprising two search activities for searching first and second sources, respectively, wherein a search activity includes conducting a search in a source specified in the search parameter;
**characterized in that** the processing device (712) further is for executing instructions to:
- specify the order in which the search activities are carried-out by weighting each search activity based on the parameters and/or queries associated with the search, wherein tokens are assigned to or withdrawn from the search activities based on the search parameters and/or the length and the content of the one or more search queries, the sum of all tokens for a search activity constituting its weight, and wherein a number of tokens assigned or withdrawn for a search activity is customizable;
- perform, based on the order, one of the search activities, to identify a first set of documents; and
- perform the second search activity using the first set of documents, wherein the second search activity is performed to identify a second set of documents, the second set of documents being a subset of the first set of documents.

10. The system of claim 9, wherein the instructions implement an input engine, an evaluation engine (714), a determination engine (716), and a search engine (717).

## Patentansprüche

1. Verfahren zum Suchen nach Dokumenten unter Verwendung unterschiedlicher Metadatenquellen, wobei Suchen auf Text in Dokumenten oder auf Metadaten basieren, die mit oder in den Dokumenten gespeichert sind, umfassend:
- Empfangen einer Suchanweisung, die Informationen für die Dokumente enthält, wobei die Suchanweisung eine oder mehrere Suchabfragen und einen oder mehrere Suchparameter umfasst, wobei jede der einen oder mehreren Suchabfragen Daten enthält, nach denen in Quellen zu suchen ist, die durch die Suchparameter spezifiziert sind, und wobei jeder des einen oder der mehreren Parameter Organisationsinformationen ist bzw. sind, die der Art von informationen entsprechen, die zu suchen sind, einschließlich Identifizieren der zu durchsuchenden Quellen;
- Analysieren (601) der Suchanweisung, wobei Suchabfragen und Suchparameter in der Suchanweisung identifiziert werden, und Verknüpfen, in der Suchanweisung, jeder Suchabfrage mit einem oder mehreren Suchparametern;
- Bestimmen (602) einer Suchstrategie basierend auf der Suchanweisung, wobei die Suchstrategie zwei Suchaktivitäten zum Durchsuchen einer ersten bzw. einer zweiten Quelle umfasst, wobei eine Suchaktivität das Durchführen einer Suche in einer Quelle beinhaltet, die in dem Suchparameter spezifiziert ist;
**dadurch gekennzeichnet, dass** das Verfahren ferner umfasst:
- Spezifizieren der Reihenfolge, in der die Suchaktivitäten durchgeführt werden, durch Gewichten jeder Suchaktivität, wobei den Suchaktivitäten Token zugeteilt oder entzogen werden, und zwar basierend auf den Suchparametern und/oder der Länge und dem Inhalt der einen oder mehreren Suchabfragen, wobei die Summe aller Token für eine Suchaktivität deren Gewicht darstellt, und wobei eine Anzahl an Token, die jeder Suchaktivität zugeteilt oder entzogen werden, anpassbar ist;
- Durchführen, basierend auf der Reihenfolge, einer der Suchaktivitäten, um einen ersten Satz von Dokumenten zu identifizieren, und
- Durchführen der zweiten Suchaktivität unter Verwendung des ersten Satzes von Dokumenten, wobei die zweite Suchaktivität durchgeführt wird, um einen zweiten Satz von Dokumenten zu identifizieren, wobei der zweite Satz von Dokumenten eine Untergruppe des ersten Satzes von Dokumenten ist.

2. Verfahren nach Anspruch 1, ferner umfassend:
- Durchführen einer dritten Suchaktivität zum Durchsuchen einer dritten Quelle, wobei die dritte Suchaktivität Teil der Suchstrategie ist, wobei die dritte Suchaktivität den zweiten Satz von Dokumenten nutzt.

3. Verfahren nach Anspruch 1 oder 2, wobei das Durchführen der zweiten Suchaktivität unter Verwendung des ersten Satzes von Dokumenten das Durchführen der zweiten Suchaktivität für Informationen umfasst, die den zweiten Satz von Dokumenten betreffen.

4. Verfahren nach einem der Ansprüche 1 bis 3, ferner umfassend:
- Bereitstellen eines Ergebnisses, das durch Durchsuchen der ersten und zweiten Quelle unter Verwendung der ersten bzw. zweiten Suchaktivität erhalten wird, wobei das Ergebnis Dokumente identifiziert, die mit der Suchanweisung vereinbar sind.

5. Verfahren nach einem der Ansprüche 1 bis 4, wobei zumindest eine der ersten und zweiten Quelle zumindest eines von Tabelle und Datenbank umfasst.

6. Verfahren nach einem der Ansprüche 1 bis 5, wobei die Gewichtungen zumindest teilweise auf einer Spezifität der Suchanweisung basierend, wobei die Spezifität gemäß einer einer Anzahl von Zeichen in einem Teil der Suchanweisung und dahingehend definiert wird, ob die Suchanweisung ein Platzhalterzeichen enthält.

7. Verfahren nach einem der Ansprüche 1 bis 6, wobei die Dokumente an unterschiedlichen Orten gespeichert werden, die über ein Netzwerk zugänglich sind.

8. Computerprogramm, umfassend Instruktionen zur Verwendung beim Suchen nach Dokumenten unter Verwendung unterschiedlicher Metadatenquellen, wobei Suchen auf Text in Dokumenten oder auf Metadaten basieren, die mit oder in den Dokumenten gespeichert sind, wobei die Instruktionen zumindest eine Maschine veranlassen zum:
- Empfangen einer Suchanweisung, die Informationen für die Dokumente enthält, wobei die Suchanweisung eine oder mehrere Suchabfragen und einen oder mehrere Suchparameter umfasst, wobei jede der einen oder mehreren Suchabfragen Daten enthält, nach denen in Quellen zu suchen ist, die durch die Suchparameter spezifiziert sind, und wobei jeder des einen oder der mehreren Parameter Organisationsinformationen ist bzw. sind, die der Art von Informationen entsprechen, die zu suchen sind, einschließlich Identifizieren der zu durchsuchenden Quellen;
- Analysieren (601) der Suchanweisung, wobei Suchabfragen und Suchparameter in der Suchanweisung identifiziert werden, und Verknüpfen, in der Suchanweisung, jeder Suchabfrage mit einem oder mehreren Suchparametern;
- Bestimmen (602) einer Suchstrategie basierend auf der Suchanweisung, wobei die Suchstrategie zwei Suchaktivitäten zum Durchsuchen einer ersten bzw. einer zweiten Quelle umfasst, wobei eine Suchaktivität das Durchführen einer Suche in einer Quelle beinhaltet, die in dem Suchparameter spezifiziert ist;
**dadurch gekennzeichnet, dass** die Instruktionen die zumindest eine Maschine ferner veranlassen zum:
- Spezifizieren der Reihenfolge, in der die Suchaktivitäten durchgeführt werden, durch Gewichten jeder Suchaktivität, wobei den Suchaktivitäten Token zugeteilt oder entzogen werden, und zwar basierend auf den Suchparametern und/oder der Länge und dem Inhalt der einen oder mehreren Suchabfragen, wobei die Summe aller Token für eine Suchaktivität deren Gewicht darstellt, und wobei eine Anzahl an Token, die jeder Suchaktivität zugeteilt oder entzogen werden, anpassbar ist;
- Durchführen, basierend auf der Reihenfolge, einer der Suchaktivitäten, um einen ersten Satz von Dokumenten zu identifizieren, und
- Durchführen der zweiten Suchaktivität unter Verwendung des ersten Satzes von Dokumenten, wobei die zweite Suchaktivität durchgeführt wird, um einen zweiten Satz von Dokumenten zu identifizieren, wobei der zweite Satz von Dokumenten eine Untergruppe des ersten Satzes von Dokumenten ist.

9. System, umfassend:
- Speicherorte (710a, 710b, 710c) zum Speichern eines oder mehrerer Dokumente; und
- eine Verarbeitungsvorrichtung (712), die Instruktionen zum Suchen nach Dokumenten unter Verwendung unterschiedlicher Metadatenquellen (704, 706) ausführt, wobei Suchen auf Text in Dokumenten oder auf Metadaten basieren, die mit oder in den Dokumenten gespeichert sind, wobei die Verarbeitungsvorrichtung zum Ausführen von Instruktionen ist zum:
- Empfangen einer Suchanweisung, die Informationen für die Dokumente enthält, wobei die Suchanweisung eine oder mehrere Suchabfragen und einen oder mehrere Suchparameter umfasst, wobei jede der einen oder mehreren Suchabfragen Daten enthält, nach denen in Quellen (704, 706) zu suchen ist, die durch die Suchparameter spezifiziert sind, und wobei jeder des einen oder der mehreren Parameter Organisationsinformationen ist bzw. sind, die der Art von Informationen entsprechen, die zu suchen sind, einschließlich Identifizieren der zu durchsuchenden Quellen (704, 706);
- Analysieren (601) der Suchanweisung, wobei Suchabfragen und Suchparameter in der Suchanweisung identifiziert werden, und Verknüpfen, in der Suchanweisung, jeder Suchabfrage mit einem oder mehreren Suchparametern;
- Bestimmen (602) einer Suchstrategie basierend auf der Suchanweisung, wobei die Suchstrategie zwei Suchaktivitäten zum Durchsuchen einer ersten bzw. einer zweiten Quelle umfasst, wobei eine Suchaktivität das Durchführen einer Suche in einer Quelle beinhaltet, die in dem Suchparameter spezifiziert ist;
**dadurch gekennzeichnet, dass** die Verarbeitungsvorrichtung (712) ferner zum Ausführen von Instruktionen ist zum:
- Spezifizieren der Reihenfolge, in der die Suchaktivitäten durchgeführt werden, durch Gewichten jeder Suchaktivität, wobei den Suchaktivitäten Token zugeteilt oder entzogen werden, und zwar basierend auf den Suchparametern und/oder der Länge und dem Inhalt der einen oder mehreren Suchabfragen, wobei die Summe aller Token für eine Suchaktivität deren Gewicht darstellt, und wobei eine Anzahl an Token, die jeder Suchäktivität zugeteilt oder entzogen werden, anpassbar ist;
- Durchführen, basierend auf der Reihenfolge, einer der Suchaktivitäten, um einen ersten Satz von Dokumenten zu identifizieren, und
- Durchführen der zweiten Suchaktivität unter Verwendung des ersten Satzes von Dokumenten, wobei die zweite Suchaktivität durchgeführt wird, um einen zweiten Satz von Dokumenten zu identifizieren, wobei der zweite Satz von Dokumenten eine Untergruppe des ersten Satzes von Dokumenten ist.

10. System nach Anspruch 9, wobei die Instruktionen eine Eingabe-Engine, eine Auswertungs-Engine (714), eine Bestimmungs-Engine (716) und eine Such-Engine (717) implementieren.

## Revendications

1. Procédé de recherche de documents utilisant différentes sources de métadonnées, dans lequel les recherches sont basées sur du texte au sein de documents ou sur des métadonnées stockées avec ou dans les documents, comprenant:
- recevoir une déclaration de recherche contenant des informations pour les documents, dans lequel la déclaration de recherche comprend une ou plusieurs requêtes de recherche et un ou plusieurs paramètres de recherche, dans lequel chacune de la ou des requêtes de recherche contient des données devant faire l'objet d'une recherche dans des sources spécifiées par les paramètres de recherche, et chacun du ou des paramètres étant des informations organisationnelles qui correspondent au type d'informations devant faire l'objet d'une recherche, y compris identifier les sources devant faire l'objet d'une recherche ;
- analyser (601) la déclaration de recherche, dans lequel des requêtes de recherche et paramètres de recherche dans la déclaration de recherche sont identifiés, et associer, dans la déclaration de recherche, chaque requête de recherche à un ou plusieurs paramètres de recherche ;
- déterminer (602) une stratégie de recherche en fonction de la déclaration de recherche, la stratégie de recherche comprenant deux activités de recherche pour effectuer une recherche dans des première et seconde sources, respectivement, dans lequel une activité de recherche inclut mener une recherche dans une source spécifiée dans le paramètre de recherche ;
**caractérisé en ce que** le procédé comprend en outre
- spécifier l'ordre dans lequel les activités de recherche sont effectuées en pondérant chaque activité de recherche, dans lequel des jetons sont attribués à ou retirés des activités de recherche en fonction des paramètres de recherche et/ou de la longueur et du contenu de la ou des requêtes de recherche, la somme de tous les jetons pour une activité de recherche constituant son poids, et dans lequel un nombre de jetons attribués ou retirés pour une activité de recherche est personnalisable ;
- réaliser, en fonction de l'ordre, une des activités de recherche pour identifier un premier ensemble de documents, et
- réaliser la deuxième activité de recherche en utilisant le premier ensemble de documents, dans lequel la deuxième activité de recherche est réalisée pour identifier un second ensemble de documents, le second ensemble de documents étant un sous-ensemble du premier ensemble de documents.

2. Procédé selon la revendication 1, comprenant en outre
- réaliser une troisième activité de recherche pour effectuer une recherche dans une troisième source, la troisième activité de recherche faisant partie de la stratégie de recherche, la troisième activité de recherche utilisant le second ensemble de documents.

3. Procédé selon la revendication 1 ou 2, dans lequel réaliser la deuxième activité de recherche en utilisant le premier ensemble de documents comprend réaliser la deuxième activité de recherche pour des informations concernant le second ensemble de documents.

4. Procédé selon l'une quelconque des revendications 1 à 3, comprenant en outre :
- fournir un résultat obtenu en effectuant une recherche dans les première et seconde sources en utilisant les première et deuxième activités de recherche, respectivement, le résultat identifiant des documents qui correspondent à la déclaration de recherche.

5. Procédé selon l'une quelconque des revendications 1 à 4, dans lequel au moins une des première et seconde sources comprend au moins une d'une table et d'une base de données.

6. Procédé selon l'une quelconque des revendications 1 à 5, dans lequel les pondérations sont basées au moins en partie sur une spécificité de la déclaration de recherche, la spécificité étant définie conformément à un d'un certain nombre de caractères dans une partie de la déclaration de recherche et en fonction du fait que la déclaration de recherche contienne un caractère de remplacement.

7. Procédé selon l'une quelconque des revendications 1 à 6, dans lequel les documents sont stockés à différents emplacements qui sont accessibles sur un réseau.

8. Programme informatique comprenant des instructions destinées à être utilisées dans la recherche de documents utilisant différentes sources de métadonnées, dans lequel les recherches sont basées sur du texte au sein de documents ou sur des métadonnées stockées avec ou dans les documents, les instructions étant destinées à amener au moins une machine à :
- recevoir une déclaration de recherche contenant des informations pour les documents, dans lequel la déclaration de recherche comprend une ou plusieurs requêtes de recherche et un ou plusieurs paramètres de recherche, dans lequel chacune de la ou des requêtes de recherche contient des données devant faire l'objet d'une recherche dans des sources spécifiées par les paramètres de recherche, et chacun du ou des paramètres étant des informations organisationnelles qui correspondent au type d'informations devant faire l'objet d'une recherche, y compris identifier les sources devant faire l'objet d'une recherche ;
- analyser (601) la déclaration de recherche, dans lequel des requêtes de recherche et paramètres de recherche dans la déclaration de recherche sont identifiés, et associer, dans la déclaration de recherche, chaque requête de recherche à un ou plusieurs paramètres de recherche ;
- déterminer (602) une stratégie de recherche en fonction de la déclaration de recherche, la stratégie de recherche comprenant deux activités pour effectuer une recherche dans des première et seconde sources, respectivement, dans lequel une activité de recherche inclut mener une recherche dans une source spécifiée dans le paramètre de recherche ;
**caractérisé en ce que** les instructions amènent en outre l'au moins une machine à :
- spécifier l'ordre dans lequel les activités de recherche sont effectuées en pondérant chaque activité de recherche, dans lequel des jetons sont attribués à ou retirés des activités de recherche en fonction des paramètres de recherche et/ou de la longueur et du contenu de la ou des requêtes de recherche, la somme de tous les jetons pour une activité de recherche constituant son poids, et dans lequel un nombre de jetons attribués ou retirés pour une activité de recherche est personnalisable ;
- réaliser, en fonction de l'ordre, une des activités de recherche pour identifier un premier ensemble de documents ; et
- réaliser la deuxième activité de recherche en utilisant le premier ensemble de documents, dans lequel la deuxième activité de recherche est réalisée pour identifier un second ensemble de documents, le second ensemble de documents étant un sous-ensemble du premier ensemble de documents.

9. Système comprenant :
- des emplacements de stockage (710a, 710b, 710c) pour stocker deux documents ou plus ; et
- un dispositif de traitement (712) qui exécute des instructions de recherche de documents utilisant différentes sources de métadonnées (704, 706), dans lequel les recherches sont basées sur du texte au sein de documents ou sur des métadonnées stockées avec ou dans les documents, le dispositif de traitement étant destiné à exécuter des instructions pour :
- recevoir une déclaration de recherche contenant des informations pour les documents, dans lequel la déclaration de recherche comprend une ou plusieurs requêtes de recherche et un ou plusieurs paramètres de recherche, dans lequel chacune de la ou des requêtes de recherche contient des données devant faire l'objet d'une recherche dans des sources (704, 706) spécifiées par les paramètres de recherche, et chacun du ou des paramètres étant des informations organisationnelles qui correspondent au type d'informations devant faire l'objet d'une recherche, y compris identifier les sources (704, 706) devant faire l'objet d'une recherche ;
- analyser (601) la déclaration de recherche, dans lequel des requêtes de recherche et paramètres de recherche dans la déclaration de recherche sont identifiés, et associer, dans la déclaration de recherche, chaque requête de recherche à un ou plusieurs paramètres de recherche ;
- déterminer (602) une stratégie de recherche en fonction de la déclaration de recherche, la stratégie de recherche comprenant deux activités de recherche pour effectuer une recherche dans des première et seconde sources, respectivement, dans lequel une activité de recherche inclut mener une recherche dans une source spécifiée dans le paramètre de recherche ;
**caractérisé en ce que** le dispositif de traitement (712) est en outre destiné à exécuter des instructions pour :
- spécifier l'ordre dans lequel les activités de recherche sont effectuées en pondérant chaque activité de recherche en fonction des paramètres et/ou requêtes associé(e)s à la recherche, dans lequel des jetons sont attribués à ou retirés des activités de recherche en fonction des paramètres de recherche et/ou de la longueur et du contenu de la ou des requêtes de recherche, la somme de tous les jetons pour une activité de recherche constituant son poids, et dans lequel un nombre de jetons attribués ou retirés pour une activité de recherche est personnalisable ;
- réaliser, en fonction de l'ordre, une des activités de recherche pour identifier un premier ensemble de documents ; et
- réaliser la deuxième activité de recherche en utilisant le premier ensemble de documents, dans lequel la deuxième activité de recherche est réalisée pour identifier un second ensemble de documents, le second ensemble de documents étant un sous-ensemble du premier ensemble de documents.

10. Système selon la revendication 9, dans lequel les instructions mettent en oeuvre un moteur de saisie, un moteur d'évaluation (714), un moteur de détermination (716) et un moteur de recherche (717).
